# EUROPEAN PATENT APPLICATION

(11) **EP 3 392 790 A1**
(43) Date of publication of application: **24.10.2018**
(21) Application number: 15910435.5
(22) Date of filing: 18.12.2015
(51) Int. Cl.: G06F 21/32, G06K 9/00, H04L 9/32

(54) **METHOD FOR AUTHENTICATION VIA A COMBINATION OF BIOMETRIC PARAMETERS**

(71) Applicant: Toc S.A., Santiago (CL)
(72) Inventor: NAVARRO LUFT, Ricardo, Providencia Santiago (CL)
(74) Representative: Illescas, Manuel
(86) International application number: PCT/CL2015/050052
(87) International publication number: WO 2017/100956

(57) **Abstract**

The invention relates to a method for verifying the identity of a user who is carrying out a transaction, based on a combination of biometric parameters, in particular fingerprint detection, defined as a biometric PIN, comprising the provision of a biometric device that permits the reading of the digital fingerprint, and a sequential combination of fingerprints previously registered in a registration process, wherein the user can use said combination of fingers or digital fingerprints on the device for authentication, by means of the following steps: accessing an application previously installed on the device, wherein the biometric reader is activated; placing each finger or fingerprint previously selected in the registration process on the device in a selected sequential combination, wherein each finger should have a positive correspondence or match to continue with the next finger; once the fingers forming the PIN have been placed in the correct order and with a positive match for each finger, the identity verification data (date and time, unique serial number and GPS position) of the user is encrypted, if the identification is positive; and authorizing the transaction or action.

## Description

### FIELD OF APPLICATION

The present invention relates to the telecommunications and information handling industry, particularly to the verification of identities and authentication of a person, to increase the security of transactions between a user and a transaction point or system of an institution or other service that requires the approval of the user to carry out an action.

### BACKGROUND OF THE INVENTION

One of the concepts crucial to the moment of effecting transactions or any other activity of any kind between a user and a specific point is the security of said transaction or activity. There is a high risk that during this kind of activity information is lost or indeed that a third party can take data therefrom and make subsequent malicious use of said data.

Presently, one of the most used technologies is the use of the recognition of a biometric parameter to identify the user. However, the use of only one biometric parameter has turned out to be insecure. In this sense, biometric recognition solutions have been proposed, which require the identification of two different biometric parameters, for example, fingerprint and retina. The document US9053310 describes a system and method that includes receiving a first biometric profile and associating the first biometric profile with a first application instance that is assigned as an authentication device of a first account; receiving a second biometric profile for a second application instance, wherein the second application instance is making a request on behalf of the first account; comparing the second biometric profile to the first biometric profile; and completing the request of the second application instance according to the results of the comparison of the second biometric profile to the first biometric profile.

On the other hand, the document US7130452 is related to a system and method for multi-party authentication. The multi-party authentication process uses synchronous and persistent biometric signals received from the parties in a transaction, based on a policy, to approve a transaction request. The biometric signals preferably are expressed as compressed video signals having response data. Several business applications are described that are based on the multi-party authentication engine.

This kind of solution has allowed the security of the transferred data to be increased.

### TECHNICAL PROBLEM

The main technical problem posed by solutions with multiple biometric recognition is the fact that said recognition becomes more complex, since when using at least two different biometric parameters, it is necessary to have differentiated devices for each biometric parameter, which makes the process of recognition slower and more expensive. On the other hand, a greater amount of information must be stored prior to recognition, i.e., a greater number of different biometric parameters should be registered to be able to use this type of recognition.

### TECHNICAL SOLUTION

In order to increase the security of transaction systems between a user and a transaction point, a method is proposed, which allows verification of the identity of a user that is carrying out a transaction based on a combination of biometric parameters, particularly, print detection.

The method comprises the combination of one or more fingerprints in order to be able to carry out the identification of a user. This identification will be carried out in a fixed or mobile device, which includes a print reader. The advantage of this solution lies in the fact that it does not require more than one type of biometric device to carry out the identification.

### BRIEF DESCRIPTION OF THE DRAWINGS

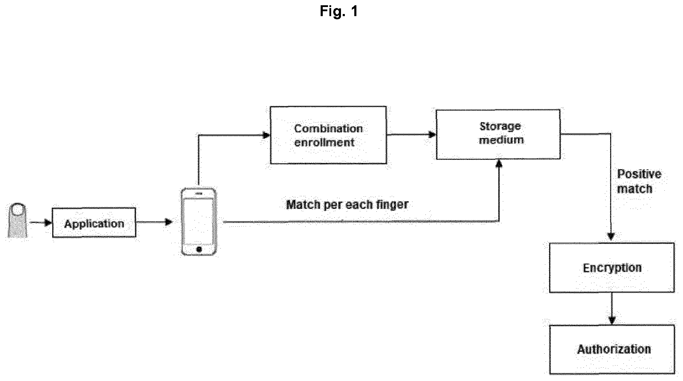

Figure 1 consists of a diagram of the method according to a preferred embodiment of the invention.

### DETAILED DESCRIPTION OF THE INVENTION

The present invention relates to a method for verifying the identity of a user that is carrying out a transaction based on a combination of biometric parameters, particularly, print detection. Said method is defined under the use of a biometric PIN.Firstly, the user shall have a biometric device (1) at their disposition that allows their fingerprint to be read. Said biometric device (1) can be of the mobile device type, which comprises a location system or GPS. Subsequently, the registration of a combination of fingerprints (2) shall be carried out, wherein said combination is of at least two prints in sequence. In this sense, the possible combinations are associated with the amount of prints available, i.e., a maximum often.

The registered combination (2) is stored in at least one storage medium (3). Said storage medium (3) can be in the cloud, a server, or the same fixed or mobile device (1). In this way, after the registration and storage of the combination /sequence, the user can use said combination of fingers or fingerprints on the device (1) to authenticate themselves by the following steps:
- accessing an application (10) previously installed on the device, wherein the biometric reader is activated;
- placing each finger (11) previously selected in the registration process in the selected sequence on the device (1), wherein each finger must have a positive correspondence or match to continue with the next finger;
- once the fingers forming the PIN (for example, left index/right thumb/ right index) have been placed in the correct order and with a positive match for each finger, the identity verification data (date and time, unique serial number and GPS* position) of the user is encrypted, if the identification is positive; and
- authorizing (13) the transaction or action on the device.

In the case of the use of GPS, this is only carried out if the device comprises a GPS system.

## Claims

1. A method for verifying the identity of a user that is carrying out a transaction, based on a combination of biometric parameters, particularly print detection defined as biometric PIN, **CHARACTERIZED in that** said method comprises providing a biometric device that allows the user's fingerprint to be read, and a sequential combination of fingerprints previously registered in an registration process, where the user can use said combination of fingers or digital fingerprints on the device to authenticate themselves by the following steps:
- accessing an application previously installed on the device, wherein the biometric reader is activated;
- placing each finger or fingerprint previously selected in the registration process in the selected sequential combination on the device, wherein each finger must have a positive correspondence or match to continue with the next finger;
- once the fingers forming the PIN have been placed in the correct order and with a positive match for each finger, the identity verification data (date and time, unique serial number and GPS position (if available)) of the user is encrypted, if the identification is positive, and
- authorizing the transaction or action on the device.

2. The method for verifying the identity of a user according to claim 1, **CHARACTERIZED in that** the device that is provided is a fixed or mobile device.

3. The method for verifying the identity of a user according to claim 1, **CHARACTERIZED in that** the registration process consists of the registration of a combination of digital fingerprints, wherein said combination is of at least two fingerprints in sequence.

4. The method for verifying the identity of a user according to claim 3, **CHARACTERIZED in that** the registered combination is stored in at least one storage medium.

5. The method for verifying the identity of a user according to claim 4, **CHARACTERIZED in that** said storage medium can be in the cloud, a server or the device itself.
